## Europäisches Patentamt
## European Patent Office
## Office européen des brevets

(11) Publication number: **0 186 123**
**A2**

---

(12) # EUROPEAN PATENT APPLICATION

(21) Application number: **85116174.5**

(22) Date of filing: **18.12.85**

(51) Int. Cl.⁴: **B 60 K 17/34**

---

(30) Priority: **18.12.84 JP 265472/84**

(43) Date of publication of application:
**02.07.86 Bulletin 86/27**

(84) Designated Contracting States:
**DE FR GB**

(71) Applicant: **NISSAN MOTOR CO., LTD.**
**No.2, Takara-cho, Kanagawa-ku**
**Yokohama City(JP)**

(72) Inventor: **Takahashi, Kotei**
**No. 4-2-4-508, Araisono**
**Sagamihara City(JP)**

(74) Representative: **Patentanwälte Grünecker, Kinkeldey,**
**Stockmair & Partner**
**Maximilianstrasse 58**
**D-8000 München 22(DE)**

---

(54) Vehicle drive system.

(57) In a vehicle drive system having a longitudinal engine and a transaxle in line therewith, a speed-up mechanism is incorporated in the transaxle in place of a differential mechanism so as to increase output speed of an output shaft of the transaxle.

*FIG.1*

# VEHICLE DRIVE SYSTEM

## BACKGROUND OF THE INVENTION

### 1. Field of the Invention

The present invention relates in general to vehicle drive system and more particularly to a vehicle drive system for a longitudinal engine layout.

### 2. Description of the Prior Art

It is a known technique to utilize a power unit for a transverse-front-engine front-drive or transverse-rear-engine rear-drive vehicle (hereinafter referred to as a transverse F-F or R-R vehicle) as a power unit for a four wheel drive vehicle of a longitudinal engine layout as is disclosed in the Japanese Provisional Patent Publication Nos. 59-20371 and 59-20372. The output of the power unit is transferred through front and rear final drive units to front and rear road wheels.

A power unit for a transverse F-F or R-R vehicle usually consists of an engine having an engine block of which the longitudinal ends are spaced laterally of the vehicle and a transaxle attached to one longitudinal end of the engine block. The transaxle incorporates a final drive unit consisting of a pinion at an end of a drive shaft, a ring gear meshing with the pinion and a differential mechanism. The pinion and ring gear constitute a reduction gear mechanism for reducing the output speed of the power unit.

With the above described prior art four wheel drive system, complete replacement of the final drive unit by a new transfer mechanism and therefore a considerably large conversion of the transaxle is required or the front and rear final drive units are required to be of the particular type of which the reduction gear ratio is nearly one, resulting in an increased manufacturing and assembling expense.

SUMMARY OF THE INVENTION

In accordance with the present invention, there is provided a novel and improved vehicle drive system. The drive system comprises a longitudinal engine, a transaxle in line with the engine and having an output shaft and a final drive unit drivingly connected to the output shaft for transmitting engine power to a pair of road wheels. The above structure may substantially follow the conventional fashion.

In accordance with the present invention, a speed-up mechanism is incorporated in the transaxle to increase output speed of the output shaft.

The above structure is quite effective for overcoming the above noted disadvantages and shortcomings inherent in the prior art device.

It is accordingly an object of the present invention to provide a novel and improved vehicle drive system which makes it possible to utilize an increased number of constituent parts of a transaxle of a power unit for a transverse F-F or R-R vehicle for attaining a power unit for a four wheel drive or two wheel drive vehicle of a longitudinal engine layout.

It is another object of the present invention to provide a novel and improved vehicle drive system of the above described character which makes it possible to utilize a final drive unit or units of the conventional type for transmitting engine power from the power unit to front and/or rear road wheels.

It is a further object of the present invention to provide a novel and improved vehicle drive system of the above described character which can reduce the manufacturing and assembling expense.

It is a still further object of the present invention to provide a novel and improved vehicle drive system of the above described character which can reduce the design restrictions of the vehicle.

BRIEF DESCRIPTION OF THE DRAWINGS

The features and advantages of the vehicle drive system according to the present invention will become more clearly appreciated from the following description taken in conjunction with the accompanying drawings, in which:

Fig. 1 is a diagrammatic view of a vehicle drive system according to an embodiment of the present invention; and

Figs. 2 through 8 are diagrammatic views of modified embodiments of the present invention.

DETAILED DESCRIPTION OF THE PREFERRED EMBODIMENTS

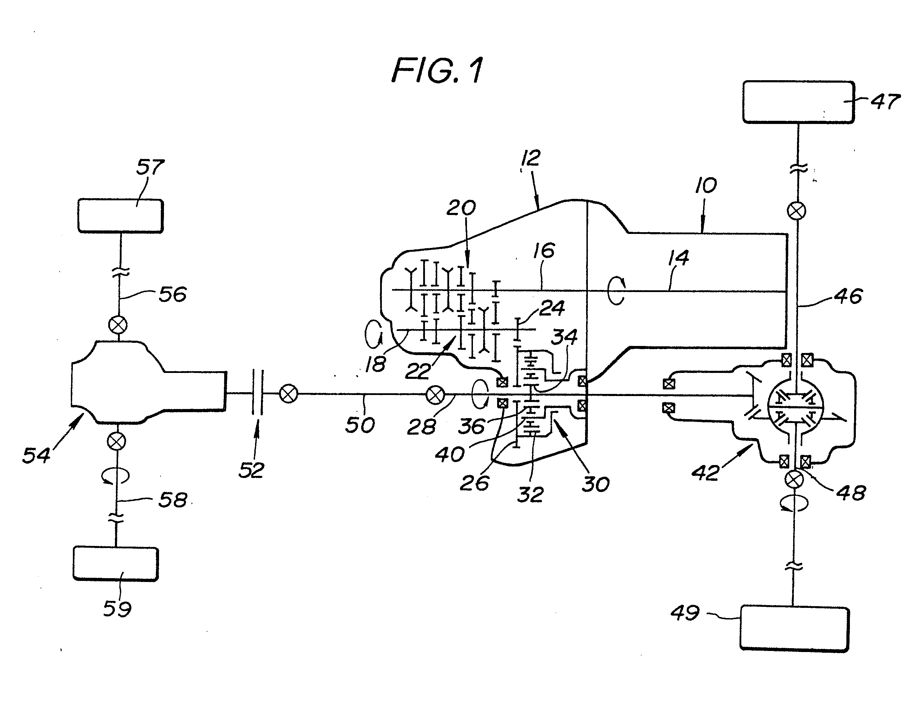

Referring first to Fig. 1, an engine is generally indicated by the reference numeral 10 and a transmission or transaxle by 12. The engine 10 and the transaxle 12 are connected to each other in such a manner that an output shaft 14 of the engine 10 and a mainshaft 16 of the transaxle 12 are axially aligned with each other. The output shaft 14 and the mainshaft 16 are so arranged as to be parallel with a longitudinal center axis of a vehicle (a right-hand part of the drawing indicates a forward part of the vehicle and a left-hand part does a rearward part). The transaxle 12 includes a counter shaft 18 in parallel with the mainshaft 16, a first group of gears 20 installed on the mainshaft 16 and a second group of gears 22 installed on the counter shaft 18. The first and second groups of gears 20 and 22 constitute a conventional power transmission mechanism and can effect a plurality of variations in transmission of engine power therebetween through selection of gear trains. A pinion gear 24 is installed on the counter shaft 18 and meshed with a ring gear 26. The ring gear 26 is rotatable on an output shaft 28, which is parallel with the mainshaft 16 and the counter shaft 18, and drivingly connected to same through a speed-up mechanism 30. The speed-up mechanism 30 is in the form of a planetary gear train and consists of an internal gear 32, a sun gear 34 and a planet gear 36 meshing with both of the internal gear 32 and sun gear 34. The planet gear 36 is rotatable on a stationary shaft 40 which is attached to a casing of the transaxle 12. The internal gear 32 is integral with or fixedly mounted on the ring gear 26, while the sun gear 34 is integral with or fixedly mounted on the output shaft 28. The output shaft 28 is drivingly connected at the right-hand end thereof to a final drive unit 42 for transmitting engine power through axle shafts 46 and 48 to rear road wheels 47 and 49. The output shaft 28 is also drivingly connected at the left-hand end thereof to a conventional final drive unit 54 for transmitting engine power through a propeller shaft 50 and a clutch 50 and through axle shafts 56 and 58 to front road wheels 57 and 59.

In operation, engine power is applied from the output shaft 14 to the mainshaft 16 of the transaxle 12 and transferred therefrom to the counter shaft 18 through a selected gear train of the first and second groups of gears 20 and 22. In this instance, the gear ratio of the ring gear 26 to the pinion gear 24 is equal to a reduction gear ratio of a commonly used final drive unit so that output speed is considerably reduced upon transmission of engine power from the pinion 24 to the ring gear 26. Engine power thus applied to the ring gear 26 is then transferred through the speed-up mechanism 30 to the output shaft 28. In this connection, since the internal gear 32 of the speed-up mechanism 30 is integral with or fixedly mounted on the ring gear 26 while the shaft 40 is fixed and the sun gear 34 is rotatable with the output shaft 28, the sun gear 34 is driven to rotate in the direction opposite to the direction of rotation of the internal gear 32 and at a speed higher than that of same. The gear ratio of the sun gear 34 to the internal gear 32 is so determined or designed as to be equal to or near the reciprocal number of the gear ratio of the ring gear 26 to the pinion gear 24. Accordingly, the reduced amount of output speed upon transmission of engine power from the pinion gear 24 to the ring gear 26 is compensated or offset by the increased amount of output speed upon transmission of engine power from the internal gear 32 to the sun gear 34, whereby the output shaft 28 is driven to rotate at a speed equal or nearly equal to that of the counter shaft 18, that is, the output shaft 28 is supplied with engine power which is substantially equal to what is applied to an output shaft of a conventional transmission. The engine power thus applied to the output shaft 28 is then transferred to the final drive unit 42 and transmitted, after reduced in output speed in a predetermined reduction gear ratio, to the axle shafts 46 and 48 through a differential mechanism of the final drive unit 42. On the other hand, upon engagement of the clutch 52, engine power is also transmitted through the propeller shaft 50, clutch 52 and the final drive unit 54 to the axle shafts 56 and 58.

In the above, it is to be noted that due to the provision of the speed-up mechanism 30 the output speed of the output shaft 28 is nearly equal to that of the counter shaft 18. By this, the final drive units 42 and 54 can be of the conventional type.

It is further to be noted that the pinion gear 24 and the ring gear 26 can be of the same constituent parts as those utilized in a final drive unit for a transverse F-F or R-R vehicle, thus making it possible to utilize an increased number of constituent parts of the final drive unit for the transverse F-F or R-R vehicle for attaining a power unit for a four wheel drive system of a longitudinal engine layout.

It is still further to be understood that according to the present invention complete replacement of the final drive unit by a new transfer mechanism is unnecessary but the power unit is commonly usuable in the drive systems of the different types provided that only the differential mechanism is replaced by the speed-up mechanism.

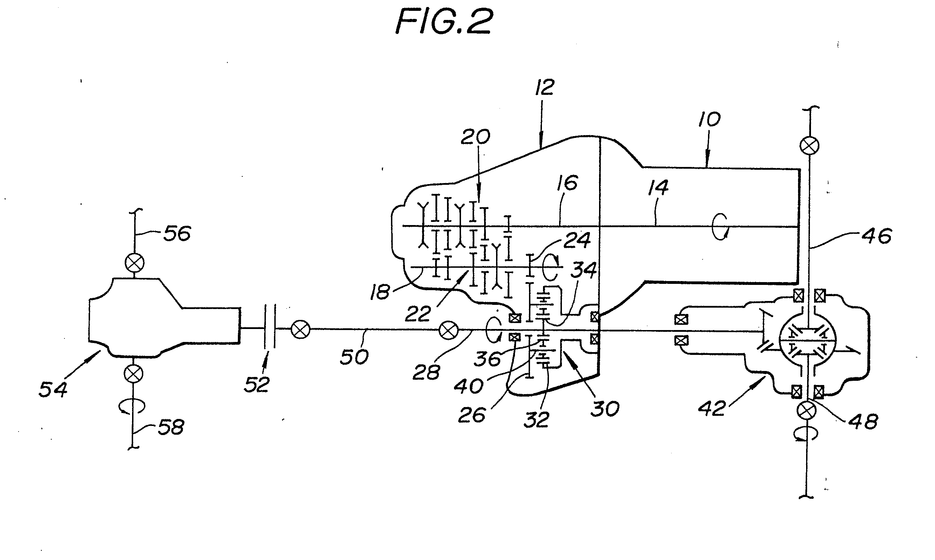

Figs. 2 through 8 show modified embodiments of the present invention.

The embodiment of Fig. 2 differs from the previous embodiment of Fig. 1 in that the speed-up mechanism 30 is connected to the ring gear 26 and the output shaft 28 in such a manner that the ring gear 26 and the output shaft 28 are driven to rotate in the same direction. To this end, the shaft 40 is integral with or fixedly mounted on the ring gear 26, while the internal gear 32 is fixedly mounted on the casing of the transaxle 12. The direction of revolution of the engine 10 is reverse to that of the previous embodiment of Fig. 1. Except for the above, this embodiment is substantially similar to the previous embodiment. By the above, the sun gear 34 is driven to rotate in the same direction as that of the ring gear 26 and at a speed higher than that of same, whereby engines which are different in the direction of revolution can be incorporated in the drive system in the same way.

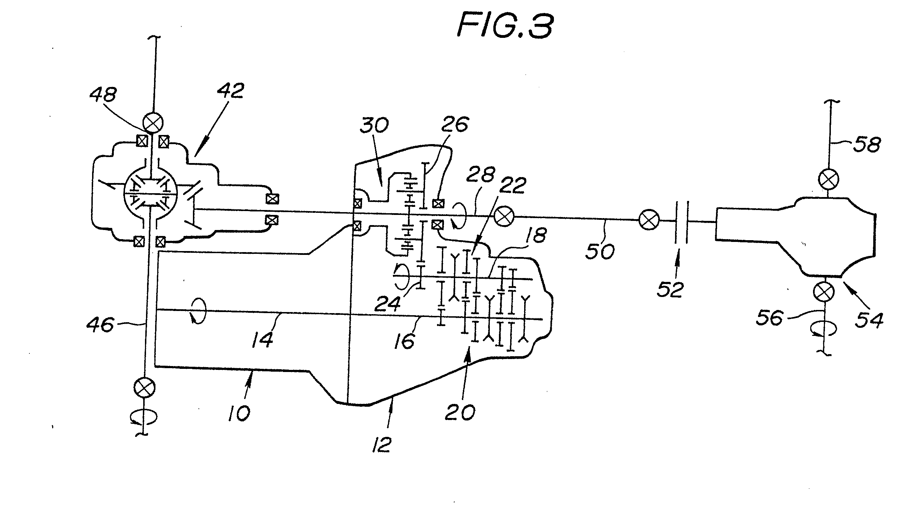

The embodiment of Fig. 3 differs from the previous embodiment of Fig. 1 or 2 in that the engine 10 and the transaxle 12 are horizontally rotatively displaced $180^{\circ}$ relative to those of the previous embodiment of Fig. 1 or 2, that is, the engine 10 is installed on the forward part of the vehicle body and the transaxle 12 is installed rearwardly of the engine 10. This kind of modification in layout of the drive system becomes possible according to the present invention since the connection of the speed-up mechanism 30 relative to the ring gear 26 and the output shaft 28 can be changed to select a desired direction of rotation of the output shaft 28. Accordingly, it becomes possible to install the engine 10 on either of the forward part and rearward part of the vehicle, whereby to make it possible to reduce the design restrictions of the vehicle.

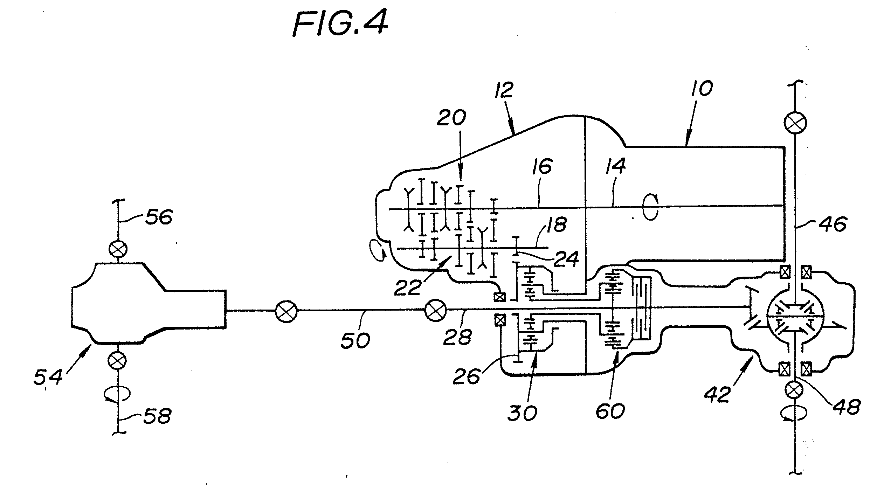

The embodiment of Fig. 4 differs from the previous embodiment of Fig. 1 in that a center differential 60 in the form of a planetary gear train is additionally incorporated to attain full-time four wheel drive.

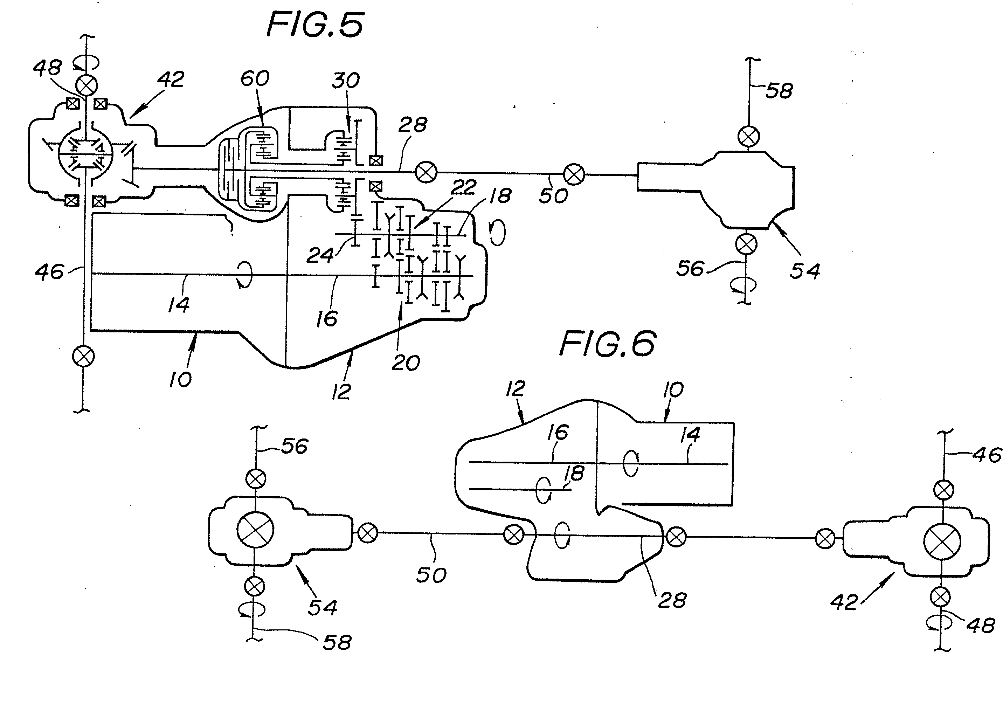

The embodiment of Fig. 5 differs from the previous embodiment of Fig. 3 in that a center differential 60 in the form of a planetary gear train is additionally incorporated to attain full-time four wheel drive.

The embodiment of Fig. 6 is adapted for midship mounting of the engine 10 on a four wheel drive vehicle such as a one-box car.

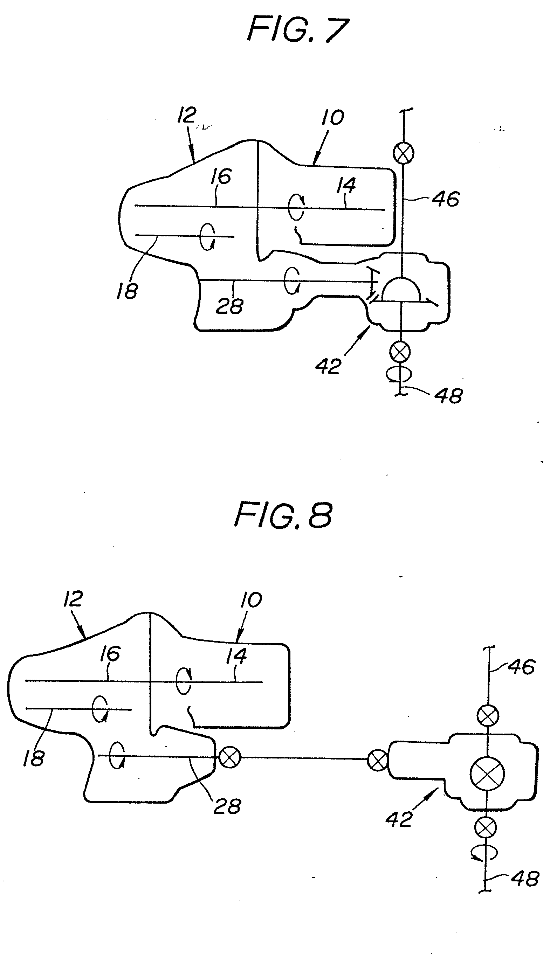

The embodiment of Fig. 7 is adapted for use in a rear wheel drive vehicle of a midship engine. From this, it is to be noted that the present invention can be applied not only to a four wheel drive vehicle but to a two wheel drive vehicle.

The embodiment of Fig. 8 is adapted for use in a rear wheel drive vehicle such as a one-box car.

WHAT IS CLAIMED IS:

1. A vehicle drive system comprising:

a longitudinal engine;

a transaxle in line with said engine and having an output shaft;

a final drive unit drivingly connected to said output shaft for transmitting engine power from said transaxle to a pair of road wheels; and

a speed-up mechanism incorporated in said transaxle for increasing output speed of said output shaft.

2. A vehicle drive system as set forth in claim 1, in which said transaxle comprises a mainshaft, a counter shaft in parallel with said main shaft, a first group of gears installed on said mainshaft, a second group of gears installed on said counter shaft and selectively engageable with said first group of gears, a pinion gear installed on said counter shaft to rotate therewith and a ring gear installed on said output shaft and meshing with said pinion gear, said output shaft being in parallel with said mainshaft and said counter shaft, and in which said speed up mechanism is in the form of a plentary gear train and interposed between said ring gear and said output shaft to drivingly interconnect the same.

3. A vehicle drive system as set forth in claim 2, in which said speed-up mechanism comprises an internal gear mounted on said ring gear to rotate therewith, a sun gear mounted on said output shaft to rotate therewith, a stationary shaft, and a planetary gear rotatably mounted on said shaft and meshing with said internal gear and said sun gear.

4.    A vehicle drive system as set forth in claim 2, in which said speed-up mechanism comprises a stationary internal gear, a sun gear mounted on said output shaft to rotate therewith, a shaft mounted on said ring gear and a planetary gear rotatably mounted on said shaft and meshing with said internal gear and said sun gear.

5.    A vehicle drive system as set forth in claim 1, further comprising a final drive unit drivingly connected to said output shaft for transmitting engine power from said transaxle to another pair of road wheels.

FIG.1

1/6

0186123

FIG.2

FIG.3

FIG.4

FIG.5

FIG.6

0186123

## FIG. 7

## FIG. 8